# EUROPEAN PATENT APPLICATION

(11) **EP 4 708 818 A1**
(43) Date of publication of application: **11.03.2026**
(21) Application number: 25199597.3
(22) Date of filing: 02.09.2025
(51) Int. Cl.: H04L 67/10, H04L 67/12

(54) **DIGITAL DEVICE INTERFACE FOR SCIENTIFIC INSTRUMENTS**

(30) Priority: 10.09.2024 US 202463692913 P
(71) Applicant: Thermo Electron North America LLC, Bannockburn IL 60015 (US); Thermo Finnigan LLC, San Jose, CA 95134 (US); Dionex Softron GmbH, 82110 Germering (DE)
(72) Inventor: RAINA, Rajesh, Fremont (US); DOSHI, Manish, Morgan Hill (US); KNEBELKAMP, Sven, Welden (US)
(74) Representative: Boult Wade Tennant LLP

(57) **Abstract**

Systems or techniques are provided for remote connection and operation of scientific instruments are provided. In various embodiments, a system can comprise a memory that stores computer executable components and a processor that executes the computer executable components stored in the memory. The computer executable components can comprise a modeling component that generates a digital representation of a scientific instrument, wherein the digital representation of the scientific instrument comprises: a discovery subcomponent that generates a communication beacon for the scientific instrument, wherein the communication beacon enables automatic discovery and connection of a remote device to the scientific instrument across a network.

## Description

### Background

Various scientific instruments and analytical instruments can vary greatly in the computational resource configurations utilized to operate said instruments. This can lead to problems in enabling remote access for the instruments.

### Summary

The following presents a summary to provide a basic understanding of one or more embodiments. This summary is not intended to identify key or critical elements, or delineate any scope of the particular embodiments or any scope of the claims. Its sole purpose is to present concepts in a simplified form as a prelude to the more detailed description that is presented later. In one or more embodiments described herein, devices, systems, computer-implemented methods, apparatus, or computer program products that facilitate a digital device interface for scientific instruments are provided.

According to one or more embodiments, a system is provided. The system can comprise a non-transitory computer-readable memory that can store computer-executable components. The system can further comprise a processor that can be operably coupled to the non-transitory computer-readable memory and that can execute the computer-executable components stored in the non-transitory computer-readable memory. In various embodiments, the computer-executable components can comprise a modeling component that generates a digital representation of a scientific instrument. In various aspects, the modeling component can comprise a discovery subcomponent that generates a communication beacon for the scientific instrument, wherein the beacon enables automatic discovery and connection of the scientific instrument across a network.

An advantage of the system, of a corresponding computer-implemented method, and/or of a computer program product can be the ability to automatically remotely connect a scientific instrument to a device across a network, thereby enabling remote access to the scientific instrument.

### Brief Description of the Drawings

Embodiments will be readily understood by the following detailed description in conjunction with the accompanying drawings. To facilitate this description, like reference numerals designate like structural elements. Embodiments are illustrated by way of example, not by way of limitation, in the figures of the accompanying drawings.
FIG. 1 is a block diagram of an example scientific instrument module for remote connection of a scientific instrument, in accordance with various embodiments described herein.
FIG. 2 is a flow diagram of an example method of performing remote connection of a scientific instrument, in accordance with various embodiments described herein.
FIGS. 3 and 4 illustrate block diagrams, of example, non-limiting, scientific instruments that facilitate remote connection and operation of a scientific instrument, in accordance with one or more embodiments described herein.
FIG. 5 illustrates an example digital representation of a scientific instrument, in accordance with one or more embodiments described herein.
FIG. 6 illustrates an example of an instrument manifest that can be transmitted by a discovery subcomponent, in accordance with one or more embodiments described herein.
FIG. 7 illustrates a diagram of an example state machine that can be utilized to track the status of one or more experiments, in accordance with one or more embodiments described herein.
FIG. 8 illustrates a diagram of automatic beacon discovery and connection, in accordance with one or more embodiments described herein.
FIGS. 9A and 9B illustrate a flow diagram of an example, non-limiting, computer-implemented method that can facilitate remote connection and operation of a scientific instrument, in accordance with one or more embodiments described herein.
FIG. 10 illustrates a block diagram of an example, non-limiting, operating environment in which one or more embodiments described herein can be facilitated.

### Detailed Description

The following detailed description is merely illustrative and is not intended to limit embodiments and/or application or utilization of embodiments. Furthermore, there is no intention to be bound by any expressed or implied information presented in the preceding Summary section, or in the Detailed Description section. One or more embodiments are now described with reference to the drawings, wherein like reference numerals are utilized to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

There is a growing desire to enable remote connectivity to various scientific instruments to allow for remote use and maintenance of the instruments, without being physically present in the laboratory. However, due to the variety of scientific instruments, there is difficulty in providing a uniform connection process that will allow for the connection and operation of various instruments of differing capabilities and design architectures.

To overcome the one or more deficiencies as described above, one or more embodiments provided herein can generate a digital representation of a scientific instrument, wherein the digital representation comprises a discovery subcomponent that generates a communication beacon that enables automatic discovery and connection of the scientific instrument across a network. This communication beacon can operate in a universal manner, allowing connection to any scientific instrument.

Furthermore, the digital representation of the scientific instrument can comprise a configuration subcomponent that transmits configuration data related to the operation of the scientific instrument across the network to devices connected to the scientific instrument, a tuning subcomponent that executes one or more calibration operations on the scientific instrument across the network, an operations subcomponent that executes one or more test operations on one or more samples using the scientific instrument and collects one or more results of the one or more test operations, and a monitoring component that monitors performance indicators of the scientific instrument. In this manner, the various subcomponents comprise the typical types of actions and information that is relevant to the operation of all scientific instruments and thus provides a universal framework for remote control and operation of the scientific instruments.

One or more embodiments are now described with reference to the drawings, where like referenced numerals are used to refer to like elements throughout. In the following description, for purposes of explanation, numerous specific details are set forth to provide a more thorough understanding of the one or more embodiments. It is evident in various cases, however, that the one or more embodiments can be practiced without these specific details.

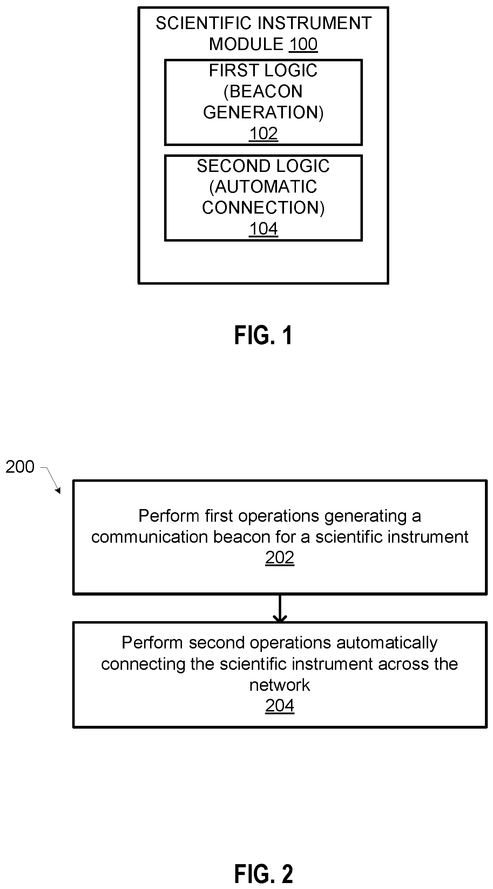

FIG. 1 illustrates an example, non-limiting block diagram of a scientific instrument module 100, in accordance with various embodiments described herein.

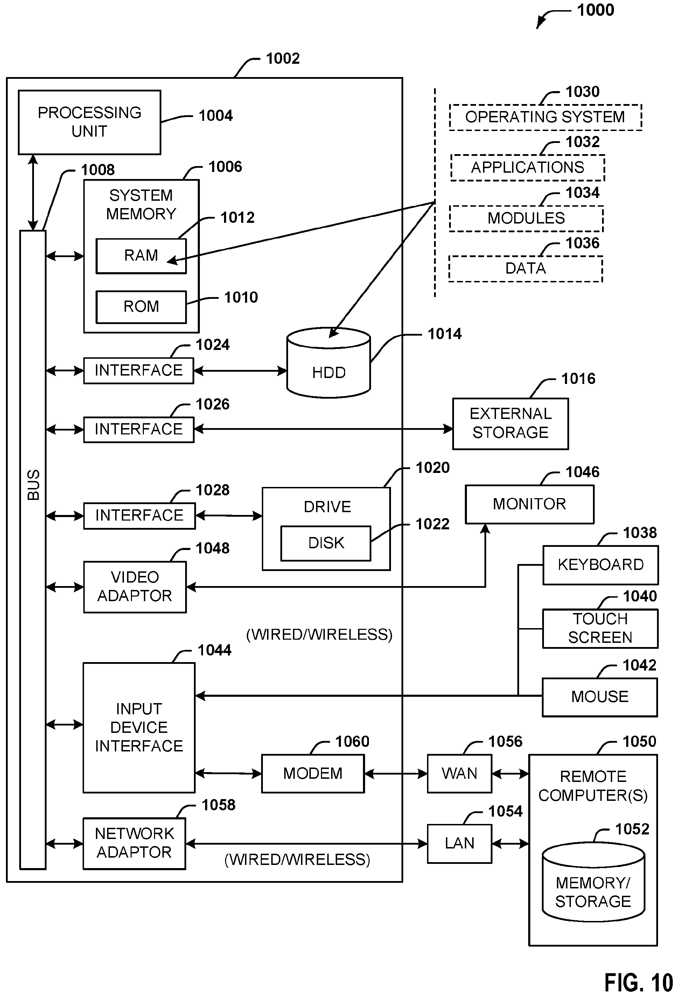

In various embodiments, the scientific instrument module 100 can be implemented by circuitry (e.g., including electrical or optical components), such as a programmed computing device. Logic of the scientific instrument module 100 can be included in a single computing device or can be distributed across multiple computing devices that are in communication with each other as appropriate. Examples of computing devices that may, singly or in combination, implement the scientific instrument module 100 are discussed herein with reference to FIG. 10.

The scientific instrument module 100 may include first logic 102 and second logic 104. As used herein, the term "logic" may include an apparatus that is to perform a set of operations associated with the logic elements. For example, any of the logic elements included in the scientific instrument module 100 may be implemented by one or more computing devices programmed with instructions to cause one or more processing devices of the computing devices to perform the associated set of operations. In a particular embodiment, a logic element may include one or more non-transitory computer-readable media having instructions thereon that, when executed by one or more processing devices of one or more computing devices, cause the one or more computing devices to perform the associated set of operations. As used herein, the term "module" may refer to a collection of one or more logic elements that, together, perform a function associated with the module. Different ones of the logic elements in a module may take the same form or may take different forms. For example, some logic in a module may be implemented by a programmed general-purpose processing device, while other logic in a module may be implemented by an application-specific integrated circuit (ASIC). In another example, different ones of the logic elements in a module may be associated with different sets of instructions executed by one or more processing devices. A module may not include all of the logic elements depicted in the associated drawing; for example, a module may include a subset of the logic elements depicted in the associated drawing when that module is to perform a subset of the operations discussed herein with reference to that module.

In various embodiments, there can be a scientific instrument corresponding to the scientific instrument module 100. In various aspects, the scientific instrument can be any suitable computerized device that can electronically measure some scientifically-relevant, clinically-relevant, or research-relevant characteristic, property, or attribute of an analytical sample (e.g., of a known or unknown mixture, compound, or collection of matter). As a non-limiting example, a scientific instrument can be a mass spectrometer. In such a case, the scientific instrument can measure or determine ion spectra (e.g., relative ion abundance as a function of mass-to-charge ratio) of the analytical sample.

The first logic 102 may generate a communication beacon for a scientific instrument. For example, the beacon can comprise a message containing a discovery URI for the scientific instrument that leads to a discovery service or platform that manages one or more laboratory devices, such as the ARDIA platform. This beacon can be sent utilizing various network technologies such as via Ethernet, WiFi Aware, Near-field communication, Blue-tooth low energy, or another suitable connection networking technology. In various embodiments, this beacon can be broadcast to all devices connected to the network. In various embodiments, the beacon can be broadcast to a management server that manages multiple instruments in a single lab setting. Furthermore, the communication beacon can be configured to broadcast using a specific network technology based on input from an entity, such as a user.

The second logic 104 may enable automatic discovery and connection of the scientific instrument to one or more devices across the network. For example, as the communication beacon is broadcast across the network, it is automatically discoverable by all devices on the network. Once an entity, such as a user, decides to connect a device on the network to the scientific instrument, the connection process can be automatic. For example, the device can use the discovery URI from the communication beacon to connect to the discovery platform, which contains additional information related to the scientific instrument. This additional information can comprise information about establishing communication channels with the scientific instrument and communication endpoints for the scientific instrument. In one or more embodiments, the connection process can switch between various connection technologies. For example, the communication beacon may be transmitted using Near-field communication, and the communication channel between the device and scientific instrument can be established over Ethernet or WiFi.

FIG. 2 is a flow diagram of a computer-implemented method 200, in accordance with one or more embodiments described herein. The operations of the computer-implemented method 200 may be used in any suitable setting to perform any suitable operations (e.g., can be performed by or used in conjunction with any of the various modules, computing devices, or graphical user interfaces described with respect to of FIGS. 1, 7, 8, 9, and 10). Operations are illustrated once each and in a particular order in FIG. 2, but the operations may be reordered or repeated as desired and appropriate (e.g., different operations performed may be performed in parallel, as suitable).

At 202, first operations may be performed. For example, the first logic 102 of scientific instrument module 100 may perform the operations of 202. The first operations may include generating the communication beacon.

At 204, second operations may be performed. For example, the second logic 104 of scientific instrument module 100 may perform the operations of 204. The second operations may include automatically connecting the scientific instrument across the network.

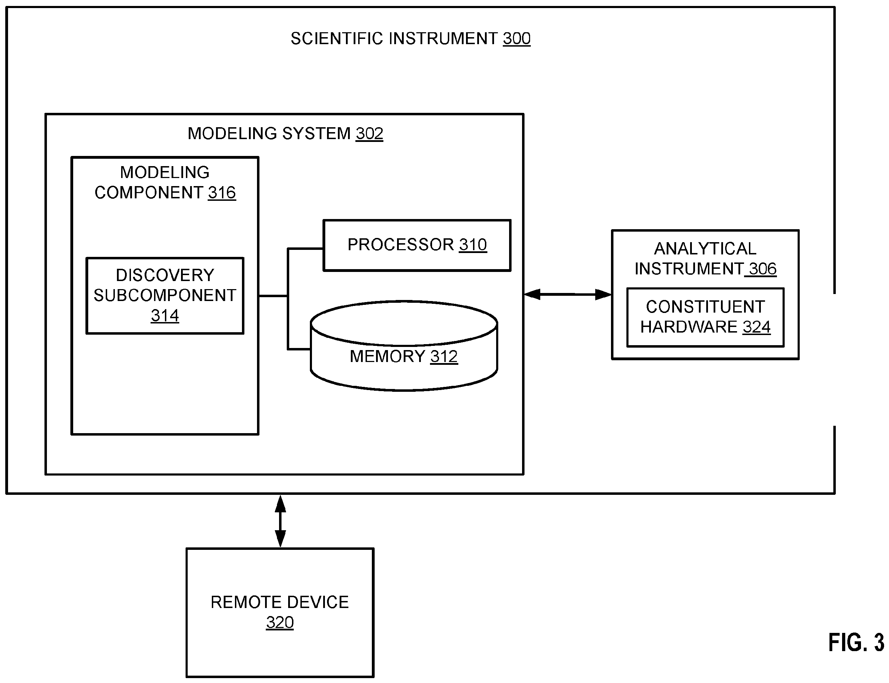

FIG. 3 illustrates a block diagram of an example, non-limiting scientific instrument 300 that can facilitate remote connection and operation of the scientific instrument, in accordance with one or more embodiments described herein. As shown, scientific instrument 300 can comprise an analytical instrument 306 and modeling system 302.

In various aspects, the analytical instrument 306 can be any suitable instrument for gathering information on an analytical sample. In various instances, the analytical instrument 306 can comprise any suitable constituent hardware 324 for measuring analysis of the analytical sample. In various embodiments, analytical instrument 306 can comprise a mass spectrometer. In various cases, the ion beam emitter of a mass spectrometer can receive a compositional part of the analytical sample and can ionize that compositional part into an ion beam. The ion beam emitter can facilitate this via any suitable ionization or fragmentation technique, such as electron ionization, chemical ionization, matrix assisted laser desorption ionization, electrospray ionization, photoionization, or inductively coupled plasma ionization, any of which can be implemented in a vacuum or at atmospheric pressure. In various aspects, the ion optics equipment can channel or steer the ion beam produced by the ion beam emitter through the mass analyzer and to the ion detector. Non-limiting examples of such ion optics equipment can include ion focusing lenses, ion guides, or ion deflectors. In various instances, the mass analyzer can separate or sort whatever ions are present in the ion beam according to their mass-to-charge ratios. Non-limiting examples of the mass analyzer can include quadrupole mass analyzers, time-of-flight mass analyzers, magnetic sector mass analyzers, electrostatic sector mass analyzers, quadrupole ion trap mass analyzers, orbitrap mass analyzers, asymmetric track lossless mass analyzers, or ion cyclotron resonance mass analyzers. In various cases, the ion detector can electronically detect or measure the relative abundances of whatever ions strike it. Non-limiting examples of the ion detector can include electron multiplier ion detectors, photomultiplier tubes, microchannel plate detectors, image charge detectors, or Faraday cup ion detectors.

In one or more embodiments, analytical instrument 306 can comprise an electron microscope. In various cases, the electron microscope can comprise a scanning electron microscope that can measure or determine a surface topography of an analytical sample. In another non-limiting example, the electron microscope can comprise a transmission electron microscope that can measure or determine internal structural details of the analytical sample. In a further, non-limiting, example, the electron microscope can comprise any suitable type of charges-particle microscope (e.g., types of microscopes that use beams of non-electron ions to capture images). Further examples of electron microscopes include, but are not limited to, energy dispersive spectroscopy, electron energy loss spectroscopy, and electron backscatter diffraction spectroscopy.

In any case, when given an analytical sample, the analytical instrument 306 can generate some form of analytical data or results from an analytical sample.

In various embodiments, the scientific instrument 300 can comprise a modeling system 302. In various cases, the modeling system 302 can facilitate remote connection and operation of analytical instrument 306 to remote device 320. In one or more embodiments, remote device 320 can comprise any computing device with a user interface, such as a desktop, laptop, smartphone, tablet, or other device. In one or more further embodiments, remote device 320 can comprise a server, such as an ARDIA server, which can manage one or more analytical instruments within a lab setting, providing consolidated access to multiple analytical instruments. Furthermore, in various embodiments, the sever can aggregate information about each of the multiple analytical instruments managed.

In various aspects, the modeling system 302 can comprise a processor 310 (e.g., computer processing unit, microprocessor) and a non-transitory computer-readable memory 312 that is operably or operatively or communicatively connected or coupled to the processor 310. The non-transitory computer-readable memory 312 can store computer-executable instructions which, upon execution by the processor 310, can cause the processor 310 or other components of the modeling system 302 (e.g., modeling component 316 and/or discovery subcomponent 314) to perform one or more acts. In various embodiments, the non-transitory computer-readable memory 312 can store computer-executable components (e.g., modeling component 316 and/or discovery subcomponent 314), and the processor 310 can execute the computer-executable components.

In various embodiments, the modeling system 302 can comprise a modeling component 316. In various aspects, as described herein, modeling component 316 can generate a digital representation of the scientific instrument (e.g., analytical instrument 306) to enable remote connection and operation of analytical instrument 306. The modeling component 316 can comprise various subcomponents for one or more categories or operations related to remote operation of the analytical instrument 306. Each of these subcomponents can be associated with a distinct communication endpoint, such as an HTTPS endpoint, to enable clear communication between the analytical instrument 306 and a remote device (e.g., remote device 320).

In one or more embodiments, modeling component 316 can comprise a discovery subcomponent 314 that generates a communication beacon for the analytical instrument 306, wherein the communication beacon enables automatic discovery and connection to the analytical instrument 306 across the network. For example, discovery subcomponent 314 can generate a communication beacon comprising a discovery Uniform Resource Identifier (URI). The discovery URI can lead to a discovery service index specific to the analytical instrument 306. This discovery service index can contain information that enables devices that access the URI to establish a communication channel with the scientific instrument 300. In one or more embodiments, discovery subcomponent 314 can broadcast the communication beacon across one or more network technologies, such as Ethernet, WiFi, Near-field communication, Bluetooth low energy, or another suitable network communication technology. The communication beacon can then be accessible by any remote device, such as remote device 320. When a remote device attempts to connect to the scientific instrument 300, the device can extract the discovery URI in the communication beacon and connect to the discovery service via the URI. The discovery URI can send the device information relevant to establishing a communication channel with the scientific instrument, such as a relevant network technology to utilize, communication protocols, available endpoints of the scientific instrument, and/or other information related to establishing a communication channel between the remote device 320 and the analytical instrument 306.

In various embodiments, the discovery subcomponent can further transmit an instrument manifest across the network either in conjunction with or as part of the communication beacon. For example, the manifest can be returned to the remote device via point-to-point API. The manifest can describe the capabilities of the scientific instrument, and can comprise information regarding sub-devices, properties, commands, diagnostics, calibrations, methods, and configurations related to the analytical instrument 306.

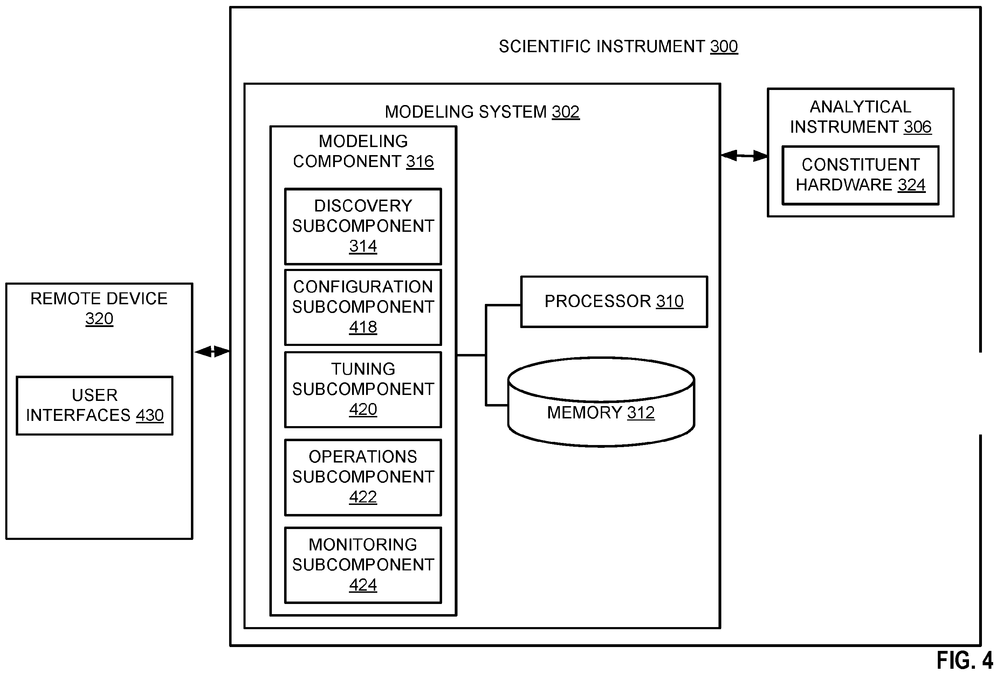

FIG. 4 illustrates a block diagram of an example, non-limiting system 400 that can facilitate remote connection and operation of a scientific instrument, in accordance with one or more embodiments described herein. As shown, system 400 can comprise analytical instrument 306, remote device 320, and modeling system 302 as described above in relation to FIG. 3. Modeling component 316 of FIG. 4 can further comprise configuration subcomponent 418, tuning subcomponent 420, operations subcomponent 422, and monitoring subcomponent 424. As described above in relation to FIG. 3, modeling component 316 can manage distinct endpoints for each of its subcomponents. As such, as part of the connection process, modeling component 316 can establish five distinct endpoints, one each for discovery subcomponent 314, configuration subcomponent 418, tuning subcomponent 420, operations subcomponent 422, and monitoring subcomponent 424. This enables clear communication between the analytical instrument 306 and the remote device 320, as commands related to specific categories are sent via specific endpoints.

In various aspects, configuration subcomponent 418 can send and receive configuration data related to scientific instrument 300 across the network to the remote device. For example, the remote device 320 can be associated with a user profile that can comprise licensing information, software updates, information related to hardware and software configurations of the remote device, result templates and other information related to how to transmit and display results between the scientific instrument 300 and the remote device 320. In various aspects, this information can be received by tuning subcomponent 420 and used to execute one or more operations. For example, if tuning subcomponent 420 receives a software update for analytical instrument 306, tuning subcomponent 420 can apply the software update as part of a calibration operation. In another embodiment, configuration subcomponent 418 can manage existing configuration data for scientific instrument 300 and transmit such configuration data to remote device 320 to enable an entity operating remote device 320 to view current configuration data, such as the current software version, of scientific instrument 300.

In various aspects, tuning subcomponent 420 can execute one or more calibration operations on the analytical instrument 306. For example, before the analytical instrument can be utilized, one or more calibration or tuning operations may be performed to ensure the analytical instrument is working properly. Tuning subcomponent 420 can instruct the analytical instrument to perform an analytical test on a control sample, wherein the result is known, and compare the result generated by the analytical instrument to the known result. If the result matches the known result of the control sample, then the analytical instrument is working properly. In various embodiments, tuning subcomponent 420 can also request diagnostic information from the analytical instrument and stream this information to the remote device 320. This information can relate to information about the analytical instrument's status, such as connected sub-devices, ambient conditions such as temperature of the analytical instrument, and/or other information related to the operational status of the scientific instrument. In a further embodiment, tuning subcomponent 420 can request data related to past performance of the analytical instrument. For example, this data can be related to when the last experiment was performed by the scientific instrument, if the user of the instrument reported any diagnostic or performance issues, and other information related to the past performance of the scientific instrument. This information can then be passed from tuning subcomponent 420 to remote device 320 over the communication channel between scientific instrument 300 and remote device 320.

In one or more embodiments, tuning subcomponent 420 can utilize this information to determine what, if any, calibration operations should be performed on the analytical instrument 306. For example, if the analytical instrument 306 has been utilized within a defined time frame, and no performance issues were noted, then tuning subcomponent 420 can forego further calibration operations. In another example, if the analytical instrument 306 reports previous performance issues, maintenance issues, and/or no recent operations within the defined timeframe, then tuning subcomponent 420 can send commands to the analytical instrument 306 to execute one or more calibration operations and return the results to tuning subcomponent 420. In another example, if the scientific instrument reports recent maintenance to a specific component, then tuning subcomponent 420 can instruct the analytical instrument 306 to execute a calibration or diagnostic operation specific to the component that reported recent maintenance.

In various aspects, operations subcomponent 422 can execute one or more test operations on one or more samples, using the scientific instrument. For example, remote device 320 can send details of an experiment that should be performed using scientific instrument 300. Based on these details, operations subcomponent 422 can send instructions to the constituent hardware of analytical instrument 306, causing analytical instrument 306 to execute one or more test operations on an analytical sample. These details can comprise information such as which analytical sample to perform the test on and settings for analytical instrument 306. In some embodiments, remote device 320 can send a notification of a specific method to perform the experiment with. The available methods can be contained in the instrument manifest sent by discovery subcomponent 314 to remote device 320.

In one or more embodiments, the methods can comprise a series of instructions related to one or more states of analytical instrument 306. Accordingly, during execution of experiments by analytical instrument 306, operations subcomponent 422 can further track the progress of the experiment through the use of a state machine. Each type of analytical device that can be utilized within scientific instrument 300 can support one or more mandatory states that are required for all types of analytical instruments and one or more optional states that may be specific to certain device types or categories. In a further embodiment, the states can comprise one or more dynamically negotiated sub-states. The sub-states provided can vary based on the sample being analyzed and the capabilities of analytical instrument 306. When analytical instrument 306 enters a sub-state, remote device 320 can be notified through an event comprising details about the sub-state. In some embodiments, analytical instrument 306 can leave the sub-state on its own without any additional actions or instructions from remote device 320. In other embodiments, analytical instrument 306 can wait in the sub-state until instructions to proceed are received from remote device 320. In one or more embodiments, operations subcomponent 422 can utilize the state machine to update remote device 320 on the progress of the experiment. For example, operations subcomponent 422 can send notifications of the current state, the time spent in the current state, and/or a state description providing more information on what the state entails the analytical instrument 306 executing.

In various embodiments, operations subcomponent 422 can facilitate the real-time data streaming of experiment results from analytical instrument 306 to remote device 320. For example, operations subcomponent 422 can collect results from analytical instrument 306 as analytical instrument 306 produces said results. These results can be forwarded from operations subcomponent 422 to remote device 320 in real-time, enabling continuous streaming of experiment results in contrast to periodic updates traditionally used. Accordingly, operations subcomponent 422 can continuously update a user interface running on remote device 320 of both the state of the experiment being executed, using the state machine, and of the results of the experiment through continuous streaming of the results.

In various aspects monitoring subcomponent 424 can monitor one or more performance indicators of analytical instrument 306. By monitoring performance indicators, monitoring subcomponent 424 can monitor the overall health of analytical instrument 306 during the execution of experiments or other operations. For example, the performance indicators can comprise metrics related to the physical conditions of constituent hardware 324, such a temperature of components, as well as performance metrics, such as is analytical instrument 306 sending results data, is analytical instrument 306 responding to commands, electrical usage of analytical instrument 306, connectivity to sub-device of analytical instrument 306, and/or any other data collected from analytical instrument 306 indicating whether analytical instrument 306 is operating within expected or acceptable conditions. In one or more embodiments, in response to a performance indicator suggesting that there is a problem with analytical instrument's 306 health, such as a component exhibiting an unexpectedly high temperature, monitoring subcomponent 424 can instruct operations subcomponent 422 to execute one or more corrective measures on analytical instrument 306. Examples of corrective measures can comprise stopping the experiment, switching to available back up components, or other measures that may prevent damage to the constituent hardware or software of analytical instrument 306.

In various aspects, remote device 320 can operate one or more user interfaces 430 related to modeling component 316. For example, in one or more embodiments, remote device 320 can operate a single user interface with sub-interfaces or multiple interfaces corresponding to the subcomponents of modeling component 316. For example, remote device 320 can operate a discovery interface that connects to discovery subcomponent 314 and enables an entity operating remote device 320 to access information related to discovery subcomponent 314, such as the device manifest, and details about the connection between remote device 320 and modeling component 316. Remote device 320 can further operate a configuration interface associated with configuration subcomponent 418 that enables access to information such as configuration settings, licensing, software versions, and software updates managed by configuration subcomponent 418. Furthermore, the configuration interface can enable remote device 320 to update or change configuration settings to cause configuration subcomponent 418 to update or change the configuration settings of analytical instrument 306. Similarly, a tuning interface can enable remote device 320 to view and/or modify the tuning of analytical instrument 306, such as calibration and diagnostic operations and the results of said operations. A control interface can facilitate the passing of experiment methods and/or operations from remote device 320 to operations subcomponent 422. Additionally, the control interface can display the real-time status of the experiments, both the current state of and results, as streamed from operations subcomponent 422. A monitoring interface can display performance indicators from monitoring subcomponent 424 to allow an entity, such as a user, to monitor the health and performance of analytical instrument 306 in real-time. It should be appreciated that use of additional user interfaces and/or sub-interfaces is envisioned, providing additional controls related to cloud storage of results or other specifications related to remote operation of scientific instrument 300 and analytical instrument 306.

It should be further appreciated that the various subcomponents can be tailored for different analytical instruments. For example, the device manifest can be unique to each analytical instrument associated with modeling component 316. Similarly, different analytical instruments will call for different configuration data, different tuning parameters, different operations methods, and monitoring of different performance indicators. Accordingly, modeling component 316 provides a general-purpose digital representation that can be modified to accurately represent specific analytical instruments, while still enabling a general communication and connection protocol for all analytical instruments, thereby facilitating automatic connection between remote device 320 and various different forms of analytical instruments with varying hardware and software configurations.

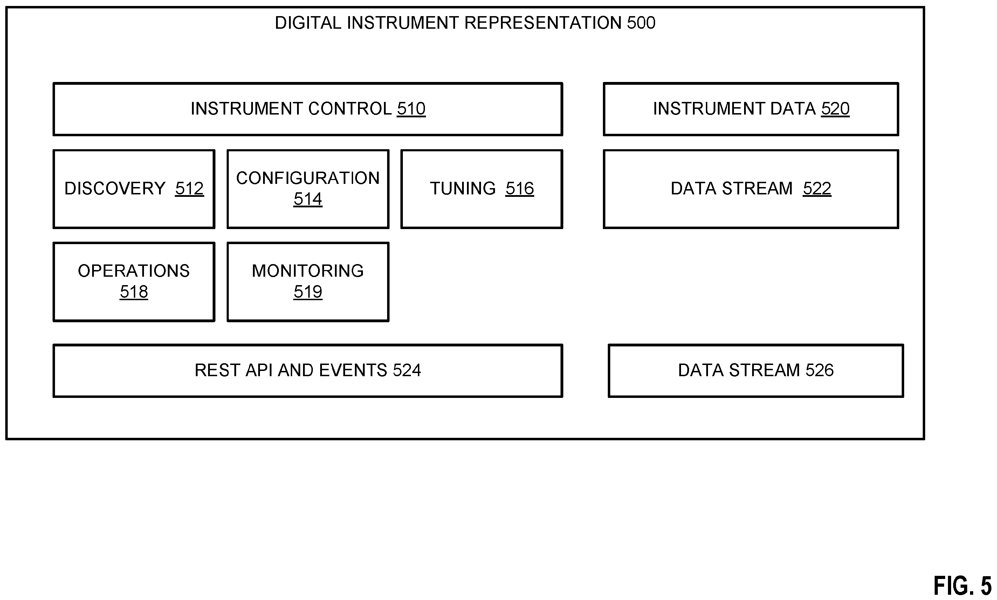

FIG. 5 illustrates an example digital instrument representation 500 of a scientific instrument, in accordance with one or more embodiments described herein.

As shown digital instrument representation 500 comprises two parts, instrument control 510 and instrument data 520. Instrument control 510 comprises one or more portions that correspond to the subcomponents of modeling component 316. For example, discovery control 512 corresponds to discovery subcomponent 314 of FIGS. 3 and 4. Additional portions of instrument control 510 comprise configuration 514, tuning 516, operations 518 and monitoring 519. Furthermore, the one or more portions of instrument control 510 can interface with one or more user interfaces operated by remote device 320 to pass data and commands between the remote device and the scientific instrument associated with digital instrument representation 500. As shown, the portions of instrument control 510 can communicate with the remote device through an API and events 524 implemented using HTTP(S), or another suitable communication protocol or framework. Instrument data 520 can comprise data that is sent from the scientific instrument to the remote device, such as data stream 522. As described above in relation to FIGS. 3 and 4, results of experiments performed by a scientific instrument can be collected in real-time by digital instrument representation 500 and then streamed to a remote device via data stream 522. As shown, data stream 522 can be sent to the remote device via a data stream 526 using HTTP(S), or another suitable communication protocol or framework.

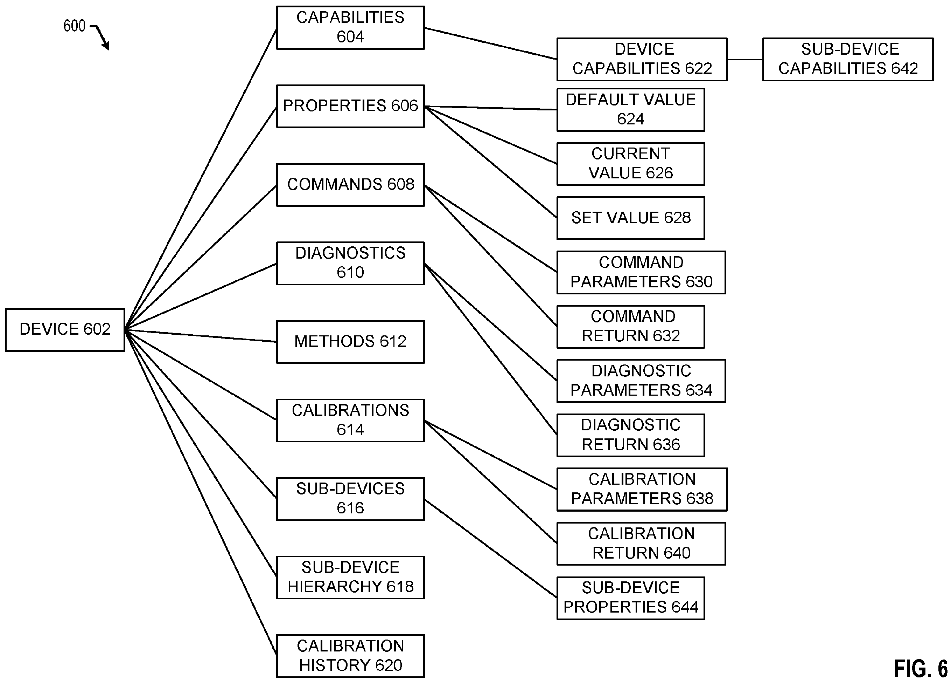

FIG. 6 illustrates an example of an instrument manifest that can be transmitted by discovery subcomponent 314, in accordance with one or more embodiments described herein.

As described above in relation to FIGS. 3 and 4, discovery subcomponent 314 can send remote device 320 an instrument manifest that describes the capabilities and provides information about the operations that can be executed by the instrument. As shown, the manifest can comprise a device name 602 and list capabilities 604, properties 606, commands 608, diagnostic operations 610, methods supported by the instrument methods 612, calibrations 614 that can be executed, sub-devices 616, instruments hierarchy of such sub-devices or instruments 618, and calibration history 620. Additionally, sub-categories such as device capabilities 622, sub-device capabilities 642, default value 624, current value 626, set value 628, command parameters 630, command return 632, diagnostic parameters 634, diagnostic return 636, calibration parameters 638, calibration return 640 and/or sub-device properties 644. In this manner, discovery subcomponent 314 can facilitate sharing of information related to the instrument for remote connection.

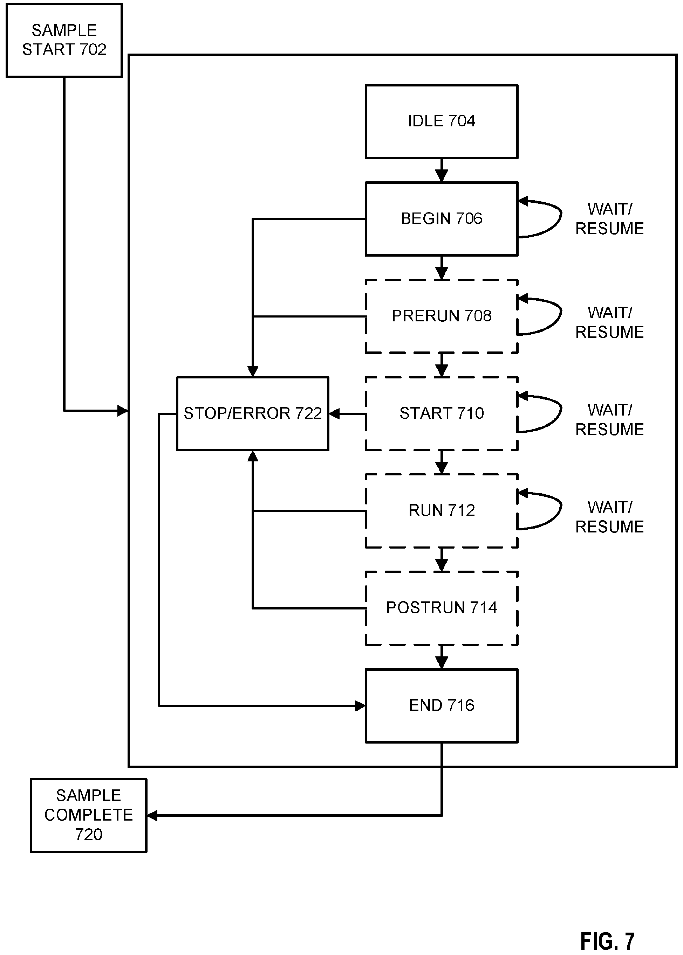

FIG. 7 illustrates a diagram of an example state machine that can be utilized to track the status of one or more experiments, in accordance with one or more embodiments described herein.

As described above in relation to FIG. 4, operations subcomponent 422 can execute experiments on analytical samples, via analytical instrument 306, utilizing one or more methods comprising a series of states. These states can be modeled in a state machine to enable operations subcomponent 422 to track the progress of the experiment, as well as notify remote device 320 of the progress. As described above in relation to FIG. 4, there are some states that all analytical instruments will support and others that will be optional based on the details and capabilities of the instrument. In FIG. 7, optional states are illustrated with dashed lines. At 702, a start sample instruction can be sent. Prior to the start sample instruction, state machine and/or analytical instrument 306 can be in an idle state 704. Upon receiving the start sample instruction 702, the analytical instrument can begin preparing for the experiment, shown by state begin 706, the state machine next moves to pre-run state 708, then start 710, run 712, post run 714, and end 716. Whenever the state machine enters a new state, operations subcomponent 422 can notify remote device 320 and a corresponding user interface can display the updated state/status. At any point, if analytical instrument 306 encounters a problem, such as hardware or software failure, or a stop triggered by monitoring subcomponent 424, the error/stop state 722 can be entered.

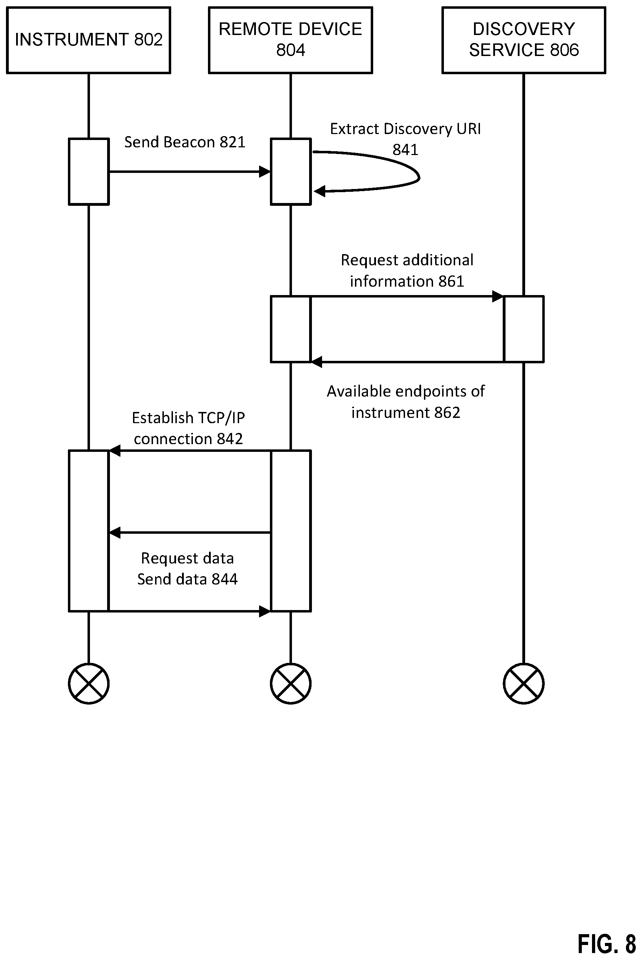

FIG. 8 illustrates a diagram of automatic beacon discovery and connection, in accordance with one or more embodiments described herein.

As shown, instrument 802 can broadcast a communication beacon (such as that generated by discovery subcomponent 314) at 821. In one or more embodiments, the beacon can be broadcast over various network technologies such as Ethernet, WiFi, Near-field communication, or Bluetooth low energy. Remote device 804 can receive the communication beacon over the broadcast and extract a discovery URI at 841 from the beacon. Remote device 804 can utilize the discovery URI to connect with a discovery service 806 and request information at 861 on connecting to instrument 802, such as what protocols to use, what connection type to use, and what endpoints of the instrument are available at 862. Remote device 804 can then establish an internet protocol suite (TCP/IP) connection at 842 between instrument 802 and remote device 804 and begin exchanging data at 844. In one or more embodiments, the connection between remote device 804 and instrument 802 can be made on a network connection type different from that utilized to broadcast the beacon.

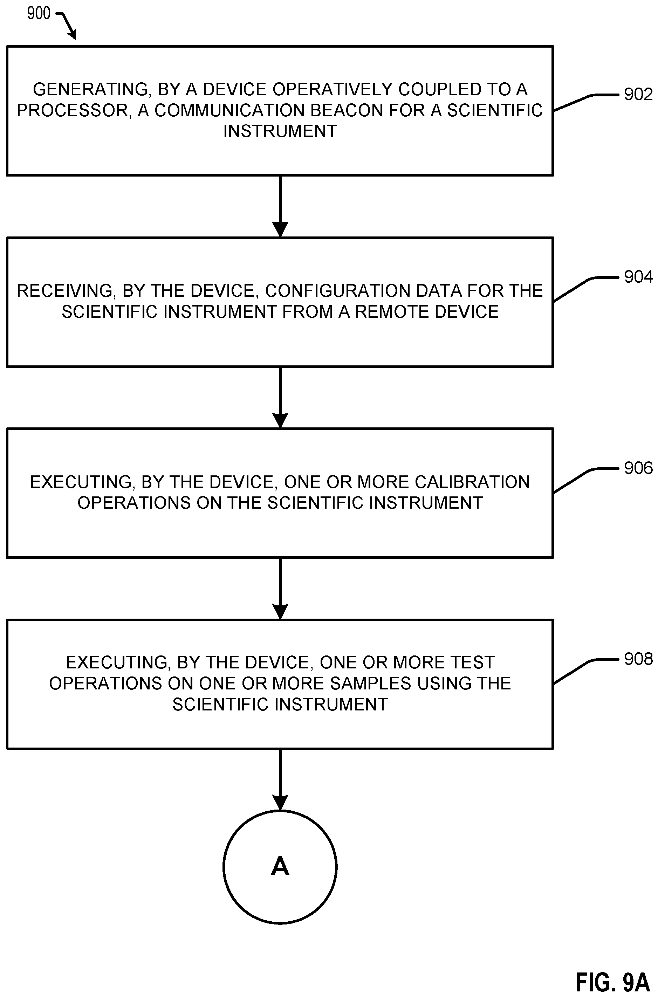

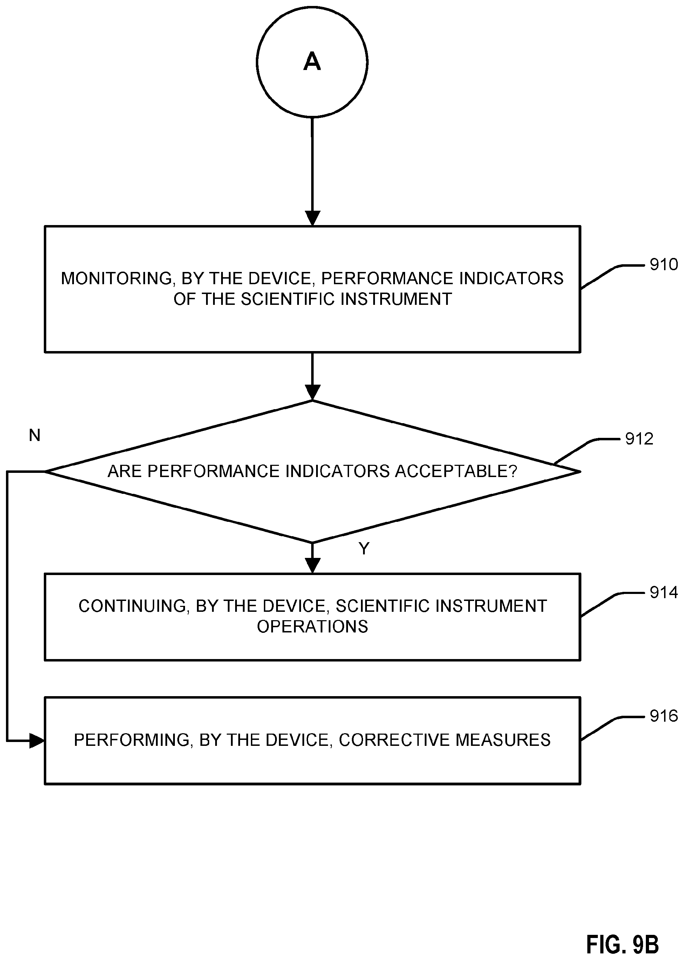

FIGS. 9A and 9B illustrate a flow diagram of an example, non-limiting, computer-implemented method 900 that can facilitate remote connection and operation of a scientific instrument, in accordance with one or more embodiments described herein.

In various cases, modeling system 302 can facilitate the computer-implemented method 900. In various embodiments, act 902 can comprise, generating, by a device (e.g., via discovery subcomponent 314) operatively coupled to a processor (e.g., processor 310), a communication beacon for a scientific instrument (e.g., scientific instrument 300 and/or analytical instrument 306). For example, as described above in reference to FIGS. 1-4 and FIG. 8, discovery subcomponent 314 can generate a communication beacon comprising a discovery URI and broadcast the beacon using one or more networking technologies. One or more remote devices (e.g., remote device 320) can extract the discovery URI from the beacon to connect with a discovery service that provides information on a networking protocol to use to connect with the scientific instrument. The remote device can then establish a secure communications channel with the scientific instrument.

In various embodiments, act 904 can comprise receiving, by the device (e.g., configuration subcomponent 418), configuration data from the remote device (e.g., remote device 320). For example, as described above in reference to FIGS. 3-4, remote device 320 can operate a user interface that connects to configuration subcomponent 418. Configuration subcomponent 418 can send the current configuration data (e.g., licensing, software version, etc.) to the remote device and can receive updated configuration data (e.g., updated licensing, software updates, etc.) from the remote device and update the scientific instrument accordingly.

In various embodiments, act 906 can comprise executing, by the device (e.g., tuning subcomponent 420), one or more calibration operations on the scientific instrument. For example, as described above in reference to FIGS. 1-4, tuning subcomponent 420 can instruct the scientific instrument to execute one or more calibration operations to ensure that the scientific instrument is operating properly and/or calibrated for upcoming operations or experiments.

In various embodiments, act 908 can comprise executing, by the device (e.g., operations subcomponent 422), one or more test operations one on one or more samples using the scientific instrument (e.g., scientific instrument 300 and/or analytical instrument 306). For example, as described above in relation to FIGS. 1-5 and 7, operations subcomponent 422 can instruct the scientific instrument to execute one or more operations on an analytical sample as part of an experiment. Operations subcomponent 422 can track the progress of the experiment through the use of a state machine and receive results data as it is produced by the scientific instrument. Operations subcomponent 422 can then transmit the results data in real-time to the remote device, allowing an entity using the remote device to monitor both the progress of the experiment and the results in real-time as they are generated.

In various embodiments, act 910 can comprise monitoring, by the device (e.g., monitoring subcomponent 424), one or more performance indicators of the scientific instrument. For example, as described in relation to FIGS. 1-5, the performance indicators can comprise metrics related to the physical conditions of constituent hardware 324, such a temperature of components, as well as performance metrics, such as is analytical instrument 306 sending results data, is analytical instrument 306 responding to commands, electrical usage of analytical instrument 306, connectivity to sub-device of analytical instrument 306, and/or any other data collected from analytical instrument 306 indicating whether analytical instrument 306 is operating within expected or acceptable conditions.

In various embodiments, act 912 can comprise determining, by the device (e.g., monitoring subcomponent 424 and/or remote device 320), if the performance indicators are acceptable. For example, monitoring subcomponent 424 can compare the performance indicators to benchmarks to determine if the performance/health of the scientific instrument is acceptable. In a further embodiment, the performance indicators can be streamed to remote device 320, and an entity operating remote device 320 can send a signal through a user interface indicating if the performance indicators are acceptable or not. In response to a "YES" determination, method 900 can continue to act 914 and continue operations of the scientific instrument. In response to a "NO" determination, one or more corrective measures can be performed, such as switching to backup hardware, modifying the operations of the scientific instrument, or ending the experiment.

An advantage of the systems, and/or of corresponding computer-implemented methods and/or computer program products described herein can be the ability to enable automatic discovery and connection to a wide variety of scientific instruments. For example, the digital representation of the scientific instrument described herein provides a generalized framework enabling easy and universal access, while still being able to be tailored to individual instruments to accurately represent and enable the full capabilities of the instruments. Furthermore, the digital instrument representation described herein enables real-time streaming of experiment results from the scientific instruments to connected remote devices, in contrast to existing methods that transmitted results only periodically.

In order to provide additional context for various embodiments described herein, FIG. 10 and the following discussion are intended to provide a brief, general description of a suitable computing environment 1000 in which the various embodiments of the embodiment described herein can be implemented. While the embodiments have been described above in the general context of computer-executable instructions that can run on one or more computers, those skilled in the art will recognize that the embodiments can be also implemented in combination with other program modules or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multi-processor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments of the embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 10, the example environment 1000 for implementing various embodiments of the aspects described herein includes a computer 1002, the computer 1002 including a processing unit 1004, a system memory 1006 and a system bus 1008. The system bus 1008 couples system components including, but not limited to, the system memory 1006 to the processing unit 1004. The processing unit 1004 can be any of various commercially available processors. Dual microprocessors and other multi processor architectures can also be employed as the processing unit 1004.

The system bus 1008 can be any of several types of bus structure that can further interconnect to a memory bus (with or without a memory controller), a peripheral bus, and a local bus using any of a variety of commercially available bus architectures. The system memory 1006 includes ROM 1010 and RAM 1012. A basic input/output system (BIOS) can be stored in a non-volatile memory such as ROM, erasable programmable read only memory (EPROM), EEPROM, which BIOS contains the basic routines that help to transfer information between elements within the computer 1002, such as during startup. The RAM 1012 can also include a high-speed RAM such as static RAM for caching data.

The computer 1002 further includes an internal hard disk drive (HDD) 1014 (e.g., EIDE, SATA), one or more external storage devices 1016 (e.g., a magnetic floppy disk drive (FDD) 1016, a memory stick or flash drive reader, a memory card reader, etc.) and a drive 1020, e.g., such as a solid state drive, an optical disk drive, which can read or write from a disk 1022, such as a CD-ROM disc, a DVD, a BD, etc. Alternatively, where a solid state drive is involved, disk 1022 would not be included, unless separate. While the internal HDD 1014 is illustrated as located within the computer 1002, the internal HDD 1014 can also be configured for external use in a suitable chassis (not shown). Additionally, while not shown in environment 1000, a solid state drive (SSD) could be used in addition to, or in place of, an HDD 1014. The HDD 1014, external storage device(s) 1016 and drive 1020 can be connected to the system bus 1008 by an HDD interface 1024, an external storage interface 1026 and a drive interface 1028, respectively. The interface 1024 for external drive implementations can include at least one or both of Universal Serial Bus (USB) and Institute of Electrical and Electronics Engineers (IEEE) 1094 interface technologies. Other external drive connection technologies are within contemplation of the embodiments described herein.

The drives and their associated computer-readable storage media provide nonvolatile storage of data, data structures, computer-executable instructions, and so forth. For the computer 1002, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 1012, including an operating system 1030, one or more application programs 1032, other program modules 1034 and program data 1036. All or portions of the operating system, applications, modules, or data can also be cached in the RAM 1012. The systems and methods described herein can be implemented utilizing various commercially available operating systems or combinations of operating systems.

Computer 1002 can optionally comprise emulation technologies. For example, a hypervisor (not shown) or other intermediary can emulate a hardware environment for operating system 1030, and the emulated hardware can optionally be different from the hardware illustrated in FIG. 10. In such an embodiment, operating system 1030 can comprise one virtual machine (VM) of multiple VMs hosted at computer 1002. Furthermore, operating system 1030 can provide runtime environments, such as the Java runtime environment or the .NET framework, for applications 1032. Runtime environments are consistent execution environments that allow applications 1032 to run on any operating system that includes the runtime environment. Similarly, operating system 1030 can support containers, and applications 1032 can be in the form of containers, which are lightweight, standalone, executable packages of software that include, e.g., code, runtime, system tools, system libraries and settings for an application.

Further, computer 1002 can be enable with a security module, such as a trusted processing module (TPM). For instance with a TPM, boot components hash next in time boot components, and wait for a match of results to secured values, before loading a next boot component. This process can take place at any layer in the code execution stack of computer 1002, e.g., applied at the application execution level or at the operating system (OS) kernel level, thereby enabling security at any level of code execution.

A user can enter commands and information into the computer 1002 through one or more wired/wireless input devices, e.g., a keyboard 1038, a touch screen 1040, and a pointing device, such as a mouse 1042. Other input devices (not shown) can include a microphone, an infrared (IR) remote control, a radio frequency (RF) remote control, or other remote control, a joystick, a virtual reality controller or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 1004 through an input device interface 1044 that can be coupled to the system bus 1008, but can be connected by other interfaces, such as a parallel port, an IEEE 1094 serial port, a game port, a USB port, an IR interface, a BLUETOOTH^{®} interface, etc.

A monitor 1046 or other type of display device can be also connected to the system bus 1008 via an interface, such as a video adapter 1048. In addition to the monitor 1046, a computer typically includes other peripheral output devices (not shown), such as speakers, printers, etc.

The computer 1002 can operate in a networked environment using logical connections via wired or wireless communications to one or more remote computers, such as a remote computer(s) 1050. The remote computer(s) 1050 can be a workstation, a server computer, a router, a personal computer, portable computer, microprocessor-based entertainment appliance, a peer device or other common network node, and typically includes many or all of the elements described relative to the computer 1002, although, for purposes of brevity, only a memory/storage device 1052 is illustrated. The logical connections depicted include wired/wireless connectivity to a local area network (LAN) 1054 or larger networks, e.g., a wide area network (WAN) 1056. Such LAN and WAN networking environments are commonplace in offices and companies, and facilitate enterprise-wide computer networks, such as intranets, all of which can connect to a global communications network, e.g., the Internet.

When used in a LAN networking environment, the computer 1002 can be connected to the local network 1054 through a wired or wireless communication network interface or adapter 1058. The adapter 1058 can facilitate wired or wireless communication to the LAN 1054, which can also include a wireless access point (AP) disposed thereon for communicating with the adapter 1058 in a wireless mode.

When used in a WAN networking environment, the computer 1002 can include a modem 1060 or can be connected to a communications server on the WAN 1056 via other means for establishing communications over the WAN 1056, such as by way of the Internet. The modem 1060, which can be internal or external and a wired or wireless device, can be connected to the system bus 1008 via the input device interface 1044. In a networked environment, program modules depicted relative to the computer 1002 or portions thereof, can be stored in the remote memory/storage device 1052. It will be appreciated that the network connections shown are example and other means of establishing a communications link between the computers can be used.

When used in either a LAN or WAN networking environment, the computer 1002 can access cloud storage systems or other network-based storage systems in addition to, or in place of, external storage devices 1016 as described above, such as but not limited to a network virtual machine providing one or more aspects of storage or processing of information. Generally, a connection between the computer 1002 and a cloud storage system can be established over a LAN 1054 or WAN 1056 e.g., by the adapter 1058 or modem 1060, respectively. Upon connecting the computer 1002 to an associated cloud storage system, the external storage interface 1026 can, with the aid of the adapter 1058 or modem 1060, manage storage provided by the cloud storage system as it would other types of external storage. For instance, the external storage interface 1026 can be configured to provide access to cloud storage sources as if those sources were physically connected to the computer 1002.

The computer 1002 can be operable to communicate with any wireless devices or entities operatively disposed in wireless communication, e.g., a printer, scanner, desktop or portable computer, portable data assistant, communications satellite, any piece of equipment or location associated with a wirelessly detectable tag (e.g., a kiosk, news stand, store shelf, etc.), and telephone. This can include Wireless Fidelity (WiFi) and BLUETOOTH^{®} wireless technologies. Thus, the communication can be a predefined structure as with a conventional network or simply an ad hoc communication between at least two devices.

Various non-limiting aspects are described in the following examples.

EXAMPLE 1: A system comprising: a memory that stores computer executable components; a processor that executes the computer executable components stored in the memory, wherein the computer executable components comprise: a modeling component that generates a digital representation of a scientific instrument, wherein the digital representation of the scientific instrument comprises: a discovery subcomponent that generates a communication beacon for the scientific instrument, wherein the communication beacon enables automatic discovery and connection of a remote device to the scientific instrument across a network.

EXAMPLE 2: The system of any preceding example, wherein the discovery subcomponent further generates and responds with an instrument manifest across the network, in response to a request from the remote device, wherein the instrument manifest describes capabilities of the scientific instrument.

EXAMPLE 3: The system of any preceding example, wherein the digital representation of the scientific instrument further comprises: a configuration subcomponent that receives configuration data for the scientific instrument from the remote device; a tuning subcomponent that executes one or more calibration operations on the scientific instrument; an operations subcomponent that executes one or more test operations on one or more samples using the scientific instrument and collects one or more results of the one or more test operations; and a monitoring subcomponent that monitors performance indicators of the scientific instrument.

EXAMPLE 4: The system of any preceding example, wherein the operations subcomponent further transmits the one or more results of the one or more test operations across the network to the remote device as the one or more results of the one or more test operations are collected.

EXAMPLE 5: The system of any preceding example, wherein the operations subcomponent further tracks states of the scientific instrument using an instrument state machine, wherein states of the scientific instrument comprise one or more mandatory states, one or more optional states, and one or more dynamically negotiated sub-states.

EXAMPLE 6: The system of any preceding example, wherein the digital representation of the scientific instrument streams instrument data to the remote device.

EXAMPLE 7: The system of any preceding example, wherein the remote device operates one or more interfaces corresponding to one or more subcomponents of the digital representation of the scientific instrument.

In various aspects, any combination or combinations of EXAMPLES 1-7 can be implemented.

EXAMPLE 8: A computer-implemented method comprising: generating, by a device operatively coupled to a processor, a digital representation of a scientific instrument, wherein the digital representation of the scientific instrument comprises: a discovery subcomponent that generates and broadcasts a communication beacon for the scientific instrument, wherein the communication beacon enables automatic discovery and connection of a remote device to the scientific instrument across a network.

EXAMPLE 9: The computer-implemented method of any preceding example, wherein the discovery subcomponent further generates and broadcasts an instrument manifest across the network, in response to a request from the remote device, wherein the instrument manifest describes capabilities of the scientific instrument.

EXAMPLE 10: The computer-implemented method of any preceding example, wherein the digital representation of the scientific instrument further comprises: a configuration subcomponent that receives configuration data for the scientific instrument from the remote device; a tuning subcomponent that executes one or more calibration operations on the scientific instrument; an operations subcomponent that executes one or more test operations on one or more samples using the scientific instrument and collects one or more results of the one or more test operations; and a monitoring subcomponent that monitors performance indicators of the scientific instrument.

EXAMPLE 11: The computer-implemented method of any preceding example, further comprising: transmitting, by the device, the one or more results of the one or more test operations from the operations subcomponent to the remote device as the one or more results of the one or more test operations are collected.

EXAMPLE 12: The computer-implemented method of any preceding example, further comprising: tracking, by the device, states of the scientific instrument using an instrument state machine.

EXAMPLE 13: The computer-implemented method of any preceding example, wherein the states of the scientific instrument comprise one or more mandatory states, one or more optional states, and one or more sub-states.

EXAMPLE 14: The computer-implemented method of any preceding example, wherein the remote device operates one or more interfaces corresponding to one or more subcomponents of the digital representation of the scientific instrument.

In various aspects, any combination or combinations of EXAMPLES 8-14 can be implemented.

EXAMPLE 15: A computer program product comprising a non-transitory computer-readable memory, having program instructions embodied therewith, the program instructions executable by a processor to cause the processor to: generate, by the processor, a digital representation of a scientific instrument, wherein the digital representation of the scientific instrument comprises: a discovery subcomponent that generates and broadcasts a communication beacon for the scientific instrument, wherein the communication beacon enables automatic discovery and connection of a remote device to the scientific instrument across a network.

EXAMPLE 16: The computer program product of any preceding example, wherein the discovery subcomponent further generates and responds with an instrument manifest across the network in response to a request from the remote device, wherein the instrument manifest describes capabilities of the scientific instrument.

EXAMPLE 17: The computer program product of any preceding example, wherein the digital representation of the scientific instrument further comprises: a configuration subcomponent that receives configuration data for the scientific instrument from the remote device; a tuning subcomponent that executes one or more calibration operations on the scientific instrument; an operations subcomponent that executes one or more test operations on one or more samples using the scientific instrument and collects one or more results of the one or more test operations; and a monitoring subcomponent that monitors performance indicators of the scientific instrument.

EXAMPLE 18: The computer program product of any preceding example, wherein the program instructions are further executable by the processor to cause the processor to: transmit, by the processor, the one or more results of the one or more test operations from the operations subcomponent to the remote device as the one or more results of the one or more test operations are collected.

EXAMPLE 19: The computer program product of any preceding example, wherein the program instructions are further executable by the processor to cause the processor to: track, by the processor, states of the scientific instrument using an instrument state machine.

EXAMPLE 20: The computer program product of any preceding example, wherein the remote device operates one or more interfaces corresponding to one or more subcomponents of the digital representation of the scientific instrument.

In various aspects, any combination or combinations of EXAMPLES 15-20 can be implemented.

In various aspects, any combination or combinations of EXAMPLES 1-20 can be implemented.

## Claims

1. A computer-implemented method comprising:
generating, by a device operatively coupled to a processor, a digital representation of a scientific instrument, wherein the digital representation of the scientific instrument comprises:
a discovery subcomponent that generates and broadcasts a communication beacon for the scientific instrument, wherein the communication beacon enables automatic discovery and connection of a remote device to the scientific instrument across a network.

2. The computer-implemented method of claim 1, wherein the discovery subcomponent further generates and broadcasts an instrument manifest across the network, in response to a request from the remote device, wherein the instrument manifest describes capabilities of the scientific instrument.

3. The computer-implemented method of claim 1, wherein the digital representation of the scientific instrument further comprises:
a configuration subcomponent that receives configuration data for the scientific instrument from the remote device;
a tuning subcomponent that executes one or more calibration operations on the scientific instrument;
an operations subcomponent that executes one or more test operations on one or more samples using the scientific instrument and collects one or more results of the one or more test operations; and
a monitoring subcomponent that monitors performance indicators of the scientific instrument.

4. The computer-implemented method of claim 3, further comprising:
transmitting, by the device, the one or more results of the one or more test operations from the operations subcomponent to the remote device as the one or more results of the one or more test operations are collected.

5. The computer-implemented method of claim 3, further comprising:
tracking, by the device, states of the scientific instrument using an instrument state machine.

6. The computer-implemented method of claim 5, wherein the states of the scientific instrument comprise one or more mandatory states, one or more optional states, and one or more sub-states.

7. The computer-implemented method of any preceding claim, wherein the remote device operates one or more interfaces corresponding to one or more subcomponents of the digital representation of the scientific instrument.

8. A computer program having program instructions executable by a processor to cause the processor to carry out the method steps of any of claims 1-8.

9. A computer program product comprising a non transitory computer readable memory upon which is embodied the computer program of claim 8.

10. A system comprising a computer readable memory upon which is stored the computer program of claim 8, and a processor configured to execute the program instructions of the said computer program stored in the computer readable memory.
